# EUROPÄISCHE PATENTSCHRIFT

(11) **EP 2 262 661 B1**
(45) Veröffentlichungstag und Bekanntmachung des Hinweises auf die Patenterteilung: **17.05.2017**
(21) Anmeldenummer: 09729295.7
(22) Anmeldetag: 23.03.2009
(51) Int. Cl.: B65G 21/08

(54) **TRANSPORTVORRICHTUNG**
TRANSPORT DEVICE
DISPOSITIF DE TRANSPORT

(30) Priorität: 09.04.2008 DE 102008018078
(43) Veröffentlichungstag der Anmeldung: 22.12.2010
(73) Patentinhaber: SEW-EURODRIVE GmbH & Co. KG, 76646 Bruchsal (DE)
(72) Erfinder: WALZ, Michael, 35239 Steffenberg (DE)
(86) Internationale Anmeldenummer: PCT/EP2009/002115
(87) Internationale Veröffentlichungsnummer: WO 2009/124654

(56) Entgegenhaltungen:
- WO-A-03/036781
- WO-A-2006/029984
- DE-A1- 19 853 250
- NL-A- 8 401 073

## Beschreibung

Die Erfindung betrifft eine Transportvorrichtung.

Linearmotoren, die eine stationäre Magnetanordnung und ein bewegbares Wicklungsteil als Primärteil aufweisen, das mittels Schleppkabel versorgt wird, sind z.B. aus NL8401073 bekannt.

Der Erfindung liegt daher die Aufgabe zugrunde, eine Transportvorrichtung mit hoher Standzeit aufzuzeigen.

Erfindungsgemäß wird die Aufgabe bei der Transportvorrichtung nach den in Anspruch 1 angegebenen Merkmalen gelöst.

Wichtige Merkmale der Erfindung bei der Transportvorrichtung nach Anspruch 1 sind, dass die Antriebseinheit mittels einer sich in Bewegungsrichtung erstreckenden Abdeckung, insbesondere dachförmige Abdeckung, zumindest nach oben abgedeckt ist und die transportierte Last außerhalb der Abdeckung vorgesehen ist.

Von Vorteil ist dabei, dass mittels der Abdeckung der Bereich der Schienen und der Kraftübertragung schützbar ist und somit eine hohe Standzeit erreichbar ist. Regenwasser, Reinigungsflüssigkeiten, herabfallende Schmutzpartikel sind mittels der Abdeckung fern haltbar.

Bei der Transportvorrichtung nach Anspruch 2 ist wichtig, dass sie einen ersten stationären Teil und einen zweiten, relativ zum ersten Teil bewegbar angeordneten Teil umfasst,
wobei der erste Teil Schienen und ein Sekundärteil umfasst,
wobei der zweite Teil ein mit dem Sekundärteil in Wirkverbindung stehendes Primärteil umfasst, das an einem schienengeführten Wagen vorgesehen ist,
wobei das erste Teil eine Abdeckung umfasst, deren Deckfläche sich in seitlicher Richtung mindestens über den Bereich der Schienen und des Sekundärteils erstreckt.

Von Vorteil ist dabei, dass eine genügend große Deckfläche, also Projektionsfläche der Abdeckung in die von den Schienen aufgespannte Ebene, erreichbar ist, die die Projektionsfläche der Schienen und des Sekundärteils umfasst. Insbesondere sind sogar weitere Projektionsflächen umfassbar, wie beispielsweise berührungslose Energieübertragung und Sensorsysteme.

Wenn auch die Abdeckung in seitlicher Richtung, also senkrecht zur Bewegungsrichtung parallel zu der von den Schienen aufgespannten Ebene, offen ist, so ist sie doch ein Schutz gegen herabfallende Partikel oder Flüssigkeiten.

Insbesondere ist die Abdeckung dachförmig oder U-förmig ausgeführt und aus Stahlblech oder einem anderen Ferromagnetischen Material. Somit ist das Magnetfeld des Sekundärteils besser abgeschirmt, da die in den Bereichen ohne Sekundärteil austretenden Feldlinien umgelenkt werden und nicht weiter nach oben dringen.

Bei einer vorteilhaften Ausgestaltung umfasst das Sekundärteil in Bewegungsrichtung voneinander beabstandete Dauermagnete, die jeweils zu ihrem nächsten Nachbarn entgegengesetzte Orientierung aufweisen. Von Vorteil ist dabei, dass ein Linearmotor in bekannter Weise einsetzbar ist. Ebenso umfasst das Primärteil eine Motorwicklung, die in der bei Linearmotoren bekannten Weise ausführbar ist.

Bei einer vorteilhaften Ausgestaltung erstreckt sich die Abdeckung in Bewegungsrichtung mehr als die Deckfläche in seitlicher Richtung. Von Vorteil ist dabei, dass nur wenige Teile notwendig sind und eine stabile Lagerung an Seilen ausführbar ist.

Bei einer vorteilhaften Ausgestaltung ist die Abdeckung derart dachförmig ausgeführt, dass Flüssigkeiten abfließen können. Von Vorteil ist dabei, dass kein Schmutz sich ansammelt und somit die Transportvorrichtung auch in der Nahrungsmittelindustrie verwendbar ist.

Bei einer vorteilhaften Ausgestaltung ist die transportierte Last außerhalb der Abdeckung vorgesehen. Von Vorteil ist dabei, dass die Last beliebig hoch und breit sein kann, also viel größer als der Bereich der Antriebseinheit. Außerdem ist die Last auf- und abladbar, ohne dass die Abdeckung zu entfernen ist.

Bei einer vorteilhaften Ausgestaltung ist die Abdeckung von ein, zwei oder mehr Spannseilen gehalten. Von Vorteil ist dabei, dass eine sehr einfache Art gefunden wurde für ein Halten der Andeckung. Zum Aufsetzen ist die Abdeckung nur auf die Seile aufzuschieben, was sehr einfach und leicht ausführbar ist

Bei einer vorteilhaften Ausgestaltung ist die gesamte Abdeckung der Transportvorrichtung aus mehreren einzelnen Abdeckungen zusammengesetzt, die auf Stoß angeordnet sind. Von Vorteil ist dabei, dass verschieden lange Transportvorrichtungen mit immer gleichen Teilen herstellbar sind. Somit muss im Lager bei der Herstellung nur eine Sorte von Teilen gelagert werden.

Bei einer vorteilhaften Ausgestaltung umgibt ein Wagen die Abdeckung ringartig, wobei der Ring deformiert ist und in einer Ebene liegt, deren Normalenrichtung in Bewegungsrichtung orientiert ist. Von Vorteil ist dabei, dass der Wagen um die Abdeckung herum angeordnet ist, ohne dass er sie berührt. Außerdem umfasst der Wagen im abgedeckten und somit geschützten Bereich die Wicklung des Antriebs, also das Primärteil, wodurch ein ungestörtes Antreiben erreichbar ist. Im außen liegenden Bereich ist die zu transportierende Last am Wagen befestigbar oder entfernbar, ohne dass die Abdeckung entfernt werden muss.

Bei einer vorteilhaften Ausgestaltung ist ein Wagen zwischen den beiden Aufhängungsstellen des Seils hin- und herbewegbar. Von Vorteil ist dabei, dass während der Hinbewegung und während der Herbewegung kein Entfernen oder Verschieben der Abdeckung notwendig ist sondern der Wagen berührfrei von der Abdeckung bewegbar ist.

Bei einer vorteilhaften Ausgestaltung wird die Wicklung des Primärteils induktiv versorgt aus einem langgestreckten Primärleiter, der im abgedeckten Bereich stationär verlegt ist, insbesondere im Bereich zwischen den Schienen. Von Vorteil ist dabei, dass keine Schmutzpartikel in den Bereich der berührungslosen Energieübertragung eintreten und diese somit ungestört stattfindet.

Bei einer vorteilhaften Ausgestaltung wird zur induktiven Energieübertragung in den Primärleiter ein mittelfrequenter Wechselstrom eingeprägt, insbesondere mit einer Frequenz zwischen 10 und 100 kHz, und der Wagen eine Sekundärwicklung umfasst, der eine Kapazität derart in Reihe oder parallel zugeschaltet ist, dass die zugehörige Resonanzfrequenz im Wesentlichen der Mittelfrequenz entspricht. Von Vorteil ist dabei, dass wegen der resonanten sekundärseitigen Auslegung auch bei Abstandsänderungen unterhalb eines kritischen Wertes nur seitliche Abweichungen des Wirkungsgrades der berührungslosen Energieübertragung auftreten.

Bei einer vorteilhaften Ausgestaltung ist im abgedeckten Bereich ein Positionserfassungssystem vorgesehen. Von Vorteil ist dabei, dass eine fehlerfreie Erfassung ermöglicht ist, weil Schmutzpartikel ferngehalten sind.

Weitere Vorteile ergeben sich aus den Unteransprüchen.

### Bezugszeichenliste

- 1: Schlitten
- 2: dachförmige Abdeckung aus Leichtmetall
- 3: Spannseil
- 4: Primärteil, umfassend Wicklung
- 5: Sekundärteil, umfassend Dauermagnete
- 6: Führung
- 7: Stoßstelle der Abdeckung

Die Erfindung wird nun anhand von Abbildungen näher erläutert:

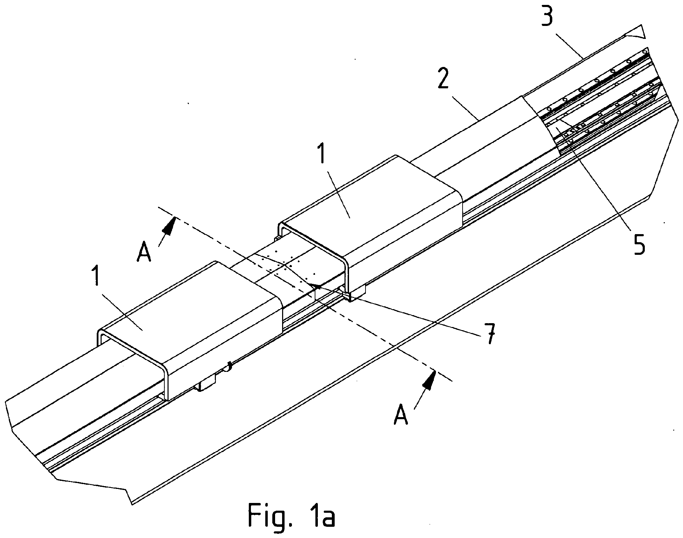

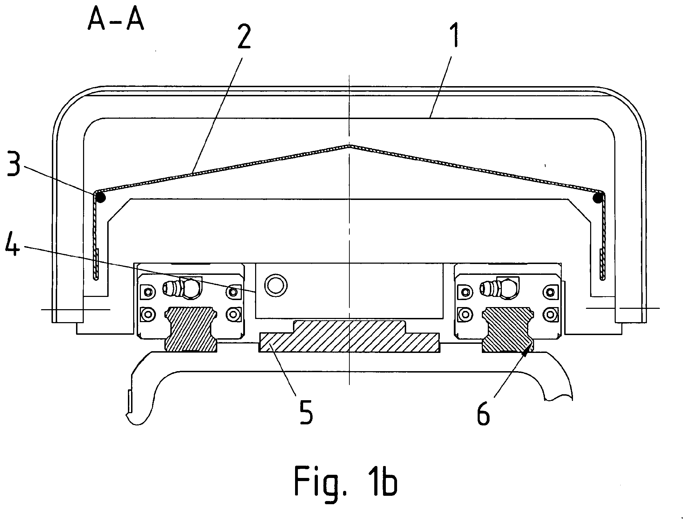

In der Figur 1a ist eine erfindungsgemäße Transportvorrichtung in Schrägansicht gezeigt, wobei die Abdeckung teilweise entfernt ist. In Figur 1b ist für einein Schnitt eine Draufsicht gezeigt. Die Transportvorrichtung ist als Linearmotor ausgeführt.

Die Transportvorrichtung umfasst schienengeführte bewegbar angeordnete Schlitten 1, die ein Primärteil 4 mit Motorwicklung tragen.

Der stationäre Teil der Transportvorrichtung umfasst Schienen und ein Dauermagnete umfassendes Sekundärteil 5.

Außerdem sind am stationären Teil Spannseile 3 vorgesehen, die in Bewegungsrichtung verlaufen und auf die eine dachförmige Abdeckung 2 aus Leichtmetall aufgesetzt ist. Die Abdeckung 2 ist beispielhaft als Blechteil, insbesondere Stanz-Biegeteil, ausgeführt.

Die Abdeckung ist aus mehreren einzelnen Abdeckungsteilen zusammengesetzt, die sich an Stoßstellen berühren. Alternativ sind die Abdeckungsteile der Abdeckung 2 ineinander geschoben zur Verbesserung der Abdeckungsfunktion, also Gehäusefunktion.

Die Schlitten 1 sind mittels der Führung 6 auf den Schienen geführt. Vorzugsweise umfasst mindestens eine der Führungen 6 ein Loslager, das einen seitlichen Freiheitsgrad derart aufweist, dass thermische Ausdehnungen des Schlittens in dieser Richtung kompensierbar sind.

Die Schlitten bewegen sich vorzugsweise linear zwischen Aufhängepunkten der Spannseile hin und her.

## Patentansprüche

1. Transportvorrichtung, umfassend einen ersten stationären Teil und einen zweiten, relativ zum ersten Teil bewegbar angeordneten Teil,
wobei der erste Teil Schienen und ein Sekundärteil umfasst,
wobei der zweite Teil ein mit dem Sekundärteil in Wirkverbindung stehendes Primärteil umfasst, das an einem schienengeführten Wagen vorgesehen ist,
wobei das erste Teil eine Abdeckung, insbesondere dachförmige Abdeckung, umfasst, deren Deckfläche sich in seitlicher Richtung mindestens über den Bereich der Schienen und des Sekundärteils erstreckt und die sich in Bewegungsrichtung erstreckt,
wobei die Abdeckung von ein, zwei oder mehr Spannseilen gehalten ist,
wobei ein Wagen die Abdeckung ringartig umgibt, wobei der Ring deformiert ist und in einer Ebene liegt, deren Normalenrichtung in Bewegungsrichtung orientiert ist,
wobei der Wagen zwischen den beiden Aufhängungsstellen des Seils hin- und herbewegbar ist.

2. Transportvorrichtung nach mindestens einem der vorangegangenen Ansprüche,
**dadurch gekennzeichnet, dass**
das Sekundärteil in Bewegungsrichtung voneinander beabstandete Dauermagnete umfasst, die jeweils zu ihrem nächsten Nachbarn entgegengesetzte Orientierung aufweisen.

3. Transportvorrichtung nach mindestens einem der vorangegangenen Ansprüche,
**dadurch gekennzeichnet, dass**
das Primärteil eine Motorwicklung umfasst.

4. Transportvorrichtung nach mindestens einem der vorangegangenen Ansprüche,
**dadurch gekennzeichnet, dass**
die Abdeckung sich in Bewegungsrichtung mehr erstreckt als die Deckfläche in seitlicher Richtung

5. Transportvorrichtung nach mindestens einem der vorangegangenen Ansprüche,
**dadurch gekennzeichnet, dass**
die Abdeckung derart dachförmig ausgeführt ist, dass Flüssigkeiten abfließen können.

6. Transportvorrichtung nach mindestens einem der vorangegangenen Ansprüche,
**dadurch gekennzeichnet, dass**
die transportierte Last außerhalb der Abdeckung vorgesehen ist.

7. Transportvorrichtung nach mindestens einem der vorangegangenen **Ansprüche,**
**dadurch gekennzeichnet, dass**
die gesamte Abdeckung der Transportvorrichtung aus mehreren einzelnen Abdeckungen zusammengesetzt ist, die auf Stoß angeordnet sind.

8. Transportvorrichtung nach mindestens einem der vorangegangenen Ansprüche,
**dadurch gekennzeichnet, dass**
die Wicklung des Primärteils induktiv versorgt wird aus einem langgestreckten Primärleiter, der im abgedeckten Bereich stationär verlegt ist, insbesondere im Bereich zwischen den schienen.

9. Transportvorrichtung nach mindestens einem der vorangegangenen Ansprüche,
**dadurch gekennzeichnet, dass**
zur induktiven Energieübertragung in den Primärleiter ein mittelfrequenter Wechselstrom eingeprägt wird, insbesondere mit einer Frequenz zwischen 10 und 100 kHz, und der Wagen eine Sekundärwicklung umfasst, der eine Kapazität derart in Reihe oder parallel zugeschaltet ist, dass die zugehörige Resonanzfrequenz im Wesentlichen der Mittelfrequenz entspricht.

10. Transportvorrichtung nach mindestens einem der vorangegangenen Ansprüche,
**dadurch gekennzeichnet, dass**
im abgedeckten Bereich ein Positionserfassungssystem vorgesehen ist.

## Claims

1. Transport device, comprising a first stationary part and a second part arranged movably relative to the first part,
wherein the first part comprises rails and a secondary part,
wherein the second part comprises a primary part in operative connection with the secondary part and provided on a rail-guided carriage,
wherein the first part comprises a cover, in particular roof-shaped cover, the top surface of which extends in the lateral direction at least over the region of the rails and the secondary part and which extends in the direction of movement,
wherein the cover is held by one, two or more tensioning cables,
wherein a carriage surrounds the cover in a ring-like manner, wherein the ring is deformed and lies in a plane, the normal direction of which is oriented in the direction of movement,
wherein the carriage is movable to and fro between the two suspension points of the cable.

2. Transport device according to at least one of the preceding claims,
**characterised in that**
the secondary part comprises permanent magnets spaced apart from one another in the direction of movement and each having the opposite orientation to their nearest neighbour.

3. Transport device according to at least one of the preceding claims,
**characterised in that**
the primary part comprises a motor winding.

4. Transport device according to at least one of the preceding claims,
**characterised in that**
the cover extends more in the direction of movement than the top surface in the lateral direction.

5. Transport device according to at least one of the preceding claims,
**characterised in that**
the cover is of such roof-shaped design that liquids can flow off.

6. Transport device according to at least one of the preceding claims,
**characterised in that**
the transported load is provided outside the cover.

7. Transport device according to at least one of the preceding claims,
**characterised in that**
the entire cover of the transport device is composed of a plurality of individual covers which are arranged in abutting manner.

8. Transport device according to at least one of the preceding claims,
**characterised in that**
the winding of the primary part is supplied inductively from an elongated primary conductor which is laid stationary in the covered region, in particular in the region between the rails.

9. Transport device according to at least one of the preceding claims,
**characterised in that**
for the inductive energy transmission a medium-frequency alternating current is applied to the primary conductor, in particular with a frequency between 10 and 100 kHz, and the carriage comprises a secondary winding to which a capacitance is connected in series or parallel in such a way that the associated resonant frequency corresponds substantially to the medium frequency.

10. Transport device according to at least one of the preceding claims,
**characterised in that**
a position detection system is provided in the covered region.

## Revendications

1. Dispositif de transport comprenant une première partie fixe, et une seconde partie agencée avec mobilité par rapport à ladite première partie,
la première partie incluant des rails et une pièce secondaire,
la seconde partie incluant une pièce primaire qui est en liaison opérante avec ladite pièce secondaire, et est prévue sur un chariot à guidage par rails,
ladite première partie incluant une coiffe, en particulier une coiffe en forme de toiture dont la surface de recouvrement s'étend, dans le sens latéral, au moins sur la région des rails et de la pièce secondaire, et s'étend dans la direction du mouvement,
ladite coiffe étant retenue par des câbles de tension au nombre de un, de deux ou plus,
un chariot entourant ladite coiffe à la manière d'un anneau, lequel anneau est déformé et est situé dans un plan dont la direction de la normale est orientée dans la direction du mouvement,
ledit chariot pouvant être animé de va-et-vient entre les deux zones de suspension du câble.

2. Dispositif de transport selon la revendication 1,
**caractérisé par le fait que**
la pièce secondaire inclut des aimants permanents mutuellement distants dans la direction du mouvement, qui présentent une orientation respectivement opposée à celle de leur voisin le plus proche.

3. Dispositif de transport selon au moins l'une des revendications précédentes,
**caractérisé par le fait que**
la pièce primaire inclut un enroulement de moteur.

4. Dispositif de transport selon au moins l'une des revendications précédentes,
**caractérisé par le fait que**
l'étendue de la coiffe est supérieure, dans la direction du mouvement, à celle de la surface de recouvrement dans le sens latéral.

5. Dispositif de transport selon au moins l'une des revendications précédentes,
**caractérisé par le fait que**
la coiffe est réalisée avec une configuration en toiture propre à permettre une évacuation de liquides.

6. Dispositif de transport selon au moins l'une des revendications précédentes,
**caractérisé par le fait que**
la charge transportée est prévue à l'extérieur de la coiffe.

7. Dispositif de transport selon au moins l'une des revendications précédentes,
**caractérisé par le fait que**
l'intégralité de la coiffe dudit dispositif de transport est composée de plusieurs coiffes individuelles agencées bord à bord.

8. Dispositif de transport selon au moins l'une des revendications précédentes,
**caractérisé par le fait que**
l'enroulement de la pièce primaire est alimenté par induction à partir d'un conducteur primaire allongé, posé de manière fixe dans la zone recouverte, en particulier dans la zone située entre les rails.

9. Dispositif de transport selon au moins l'une des revendications précédentes,
**caractérisé par le fait**
**qu'**un courant alternatif de moyenne fréquence, présentant notamment une fréquence comprise entre 10 et 100 kHz, est injecté dans le conducteur primaire en vue de la transmission d'énergie par induction, et le chariot inclut un enroulement secondaire auquel un condensateur est adjoint, en série ou en parallèle, de telle sorte que la fréquence de résonance associée corresponde, pour l'essentiel, à la fréquence moyenne.

10. Dispositif de transport selon au moins l'une des revendications précédentes,
**caractérisé par le fait**
**qu'**un système de détection d'emplacements est prévu dans la zone recouverte.
